# EUROPEAN PATENT APPLICATION

(11) **EP 2 592 821 A1**
(43) Date of publication of application: **15.05.2013**
(21) Application number: 11188619.8
(22) Date of filing: 10.11.2011
(51) Int. Cl.: H04N 5/232

(54) **Camera autofocus apparatus and associated method**

(71) Applicant: Research In Motion Limited, Waterloo, ON N2L 3W8 (CA)
(72) Inventor: Hong, Sung Ho, Waterloo, Ontario N2L 3W8 (CA); Daigle, Joshua Lucien, Waterloo, Ontario N2L 3W8 (CA); Gibert-Schachter, Cliel Yochanan Manoach, Ottawa, Ontario K1R 7X5 (CA)
(74) Representative: Bryn-Jacobsen, Caelia

(57) **Abstract**

An apparatus, and an associated method, facilitates performance of an autofocus procedure of a camera device that has variable focus capabilities. Indications of an autofocus-actuator stability time indication are provided. And, a determination is made as to whether the provided indication is of a time length greater than a frame length. If so, a blank period is appended to a frame. The length of the blank period is selected so that the time period associated with the obtained time indication is no greater than the frame period.

## Description

The present disclosure relates generally to a manner by which to autofocus a camera lens assembly of a camera, such as a wireless device that has camera functionality. More particularly, the present disclosure relates to an apparatus, and an associated method, by which to selectably append a blank period to a frame period defined in the autofocus procedure. If the time required to perform the autofocus procedure exceeds the length of the frame period, the blank period is appended.

The blank period is of a selected length, selected such that the frame period and the appended blank period together at least correspond to the time required to perform the autofocus operation at the associated stage or zone. Quicker completion of the autofocus procedure is provided through the use of appropriately-sized blank period.

### Background

Advancements in technologies have permitted the development and use of a large variety of devices capable of performing many varied functions and services. Such devices utilize electronic circuitry, and improved circuit miniaturization capabilities have permitted the devices to be of smaller dimensions, packaged in housings of smaller dimensions. Many devices are of sizes that permit the devices easily to be hand-carried, available to a user whenever needed.

Wireless devices utilized in wireless communication systems are exemplary of devices made possible as a result of advancements in technologies. A wireless device operable in a cellular or other radio communication system typically includes radio transceiver circuitry that provides for the transceiving of data with a network part of the communication system. Data originated at the wireless device is communicated to the network part and then, e.g., forwarded on to a communication endpoint. Data originated at the network part, or provided thereto, is communicated to the wireless device and received at the transceiver circuitry thereof. As the communication networks of cellular communication systems have been installed to encompass significant portions of the populated areas of the world, a user of a cellular wireless device is potentially able to communicate by way of the wireless device if positioned in an area encompassed by a cellular network and granted access to communicate there through.

A wireless device sometimes includes additional functionality in addition to the communication functionality provided by the transceiver circuitry. A wireless device that includes the additional functionality forms a multi-functional device. With increased circuit miniaturization, a wireless device is able to be configured to have multiple functionalities of increased sophistication and operability.

A wireless device sometimes, for instance, includes camera functionality and, when so-configured, the wireless device is sometimes referred to as being a camera phone. The camera functionality, typically implemented as a camera module of the wireless device, provides for the recordation of an image. The image, once recorded, is displayable at an image display element of the device or the data forming the image is communicated elsewhere for storage or display at a remote location. Camera modules are sometimes further capable of recording sequences of images that form video sequences.

To maintain the portability of a wireless device, the dimensions of a camera module are constrained. That is to say, the maximum size permitted of the camera module is limited. Due to this constraint, the capability of the camera functionality of the camera module is sometimes limited.

Often the camera module utilizes a fixed focus system having, e.g., a fixed camera lens or lens assembly. Some wireless devices having camera functionality utilize an autofocus system that includes a moveable lens assembly. The lens assembly forms part of an optical system that typically includes a sensor, a control system, and a motor to provide for focusing of light of a target upon a selected point or area.

Conventional auto focus optical systems, such as systems used in camera modules of wireless devices, proceed through a multi-step focus process to obtain a correct focus position. Conventional autofocus procedures for camera modules of wireless devices are, however, relatively slow. A user of the device must wait until the autofocus procedure is completed in order to record an image that is properly-focused.

Conventional autofocus procedures, therefore, are less than ideal. An improvement to the conventional procedures would therefore be advantageous.

### Brief Description of the Drawings

Figure 1 illustrates a functional block diagram of a communication system having a device that includes an implementation of the present disclosure as a portion thereof.

Figure 2 illustrates a representation of a set of frames and associated time periods for a corresponding autofocus stage.

Figure 3 also illustrates a representation of a set of frames, similar to the representation shown in Figure 2.

Figure 4 illustrates a representation, similar to the representations shown in Figures 2-3, but illustrates the addition of a vertical blanking period, appended to a frame period pursuant to an implementation of the present disclosure.

Figure 5 illustrates a functional block diagram of a wireless device of an exemplary implementation of the present disclosure.

Figure 6 illustrates a process diagram representative of the process of operation of an implementation of the present disclosure.

### Detailed Description

The present disclosure, accordingly, advantageously provides an apparatus, and an associated method, by which to autofocus a camera lens assembly of a camera, such as a wireless device having camera functionality.

Through operation of an implementation of the present disclosure, a manner is provided by which selectively to append a blank period to frame period, defined in the autofocus procedure. If the time required to perform operations of the autofocus procedure exceeds the length of the frame period, the blank period is appended.

In one aspect of the present disclosure, the blank period is of a selected length, selected such that the frame period and the appended blank period at least corresponds to the time to perform the autofocus operations at the associated stage or zone. Quicker completion of autofocus is provided as the blank period is selected to be of a time length that, when combined with the time frame, the total time period of the combination of the time frame and the blank period corresponds to the time to perform the autofocus operations at a corresponding stage or zone.

In another aspect of the present disclosure, the autofocus-related parameters are obtained. The parameters are time indications or time-related indications that are associated with autofocus operations at an autofocus stage.

In another aspect of the present disclosure, the autofocus-related parameters include an image exposure time period. The image exposure time period identifies a time period of a sensor that senses light energy of a target. The image exposure time period is, in one implementation, a fixed parameter and, in another implementation, a variable parameter.

In another aspect of the present disclosure, the autofocus-related parameter comprises an autofocus zone time period. The autofocus zone time period identifies the amount of time of sensor scanning to position sensor pixels at a particular zone or stage of the lens. In one implementation, the time period is a fixed time period, and, in another implementation, the time period is a variable, that is, selectable, based upon a selectable region of interest.

In another aspect of the present disclosure, the autofocus-related parameter comprises an autofocus-actuator settling period. The settling period identifies the amount of time for the camera lens assembly to move into position and then to stop oscillation, or other movement, subsequent to actuator operation to position the camera lens assembly at a particular zone or stage of autofocus operation. The settling period is, in one implementation, considered to be a non-changing period. In another implementation, the settling period is considered to be a variable parameter, e.g., changeable over time.

In another aspect of the present disclosure, the autofocus related parameter comprises a combination, e.g., a summation, of a plurality of time periods, such as the aforementioned image exposure time period, the autofocus-actuator, zone time period, and the autofocus-actuator, settling period.

In another aspect of the present disclosure, an autofocus-actuator stability time indication is provided. The autofocus-actuator stability time indication is a function of one or more autofocus-related parameters. The autofocus-actuator stability time indication is a time-based indication, defining a time period of operation of auto focus elements of a camera device at a stage or zone of an autofocus procedure.

In another aspect of the present disclosure, a determiner is provided to determine whether the autofocus-actuator stability time indication exceeds a frame period. The determiner further determines the amount by which the autofocus-actuator stability time indication is greater than the frame period if a determination is made that the autofocus-actuator stability time indication is greater than the frame period.

In another aspect of the present disclosure, a blank period appender is provided. The blank period appender appends a blank period of a selected time length to a frame period. The blank period is of a blank that, together with the duration of the frame period, to at least correspond to the time period identified by the autofocus-actuator stability time indication.

By appending a blank period to a frame period, the resultant, combined time period is at least as lengthy as the time period to perform autofocus operations at a particular autofocus zone or stage. Autofocus operations are carried out more quickly than conventionally permitted as conventional techniques require allocation of an entire frame without any autofocus operations if a preceding frame is of a length that is less than the length of time to perform autofocus operations at a particular zone or stage. By completing the autofocus operations more quickly, the camera device is more quickly able to be used to capture an in-focus image.

In these and other aspects, an apparatus and an associated method is provided for facilitating automatic focusing of a camera optical system. An auto focus actuator stability time indicator is configured to provide an indication of an autofocus-actuator stability time indication. A blank period appender is configured to append a blank period to an image frame if the autofocus-actuator stability time indication is greater than a selected threshold.

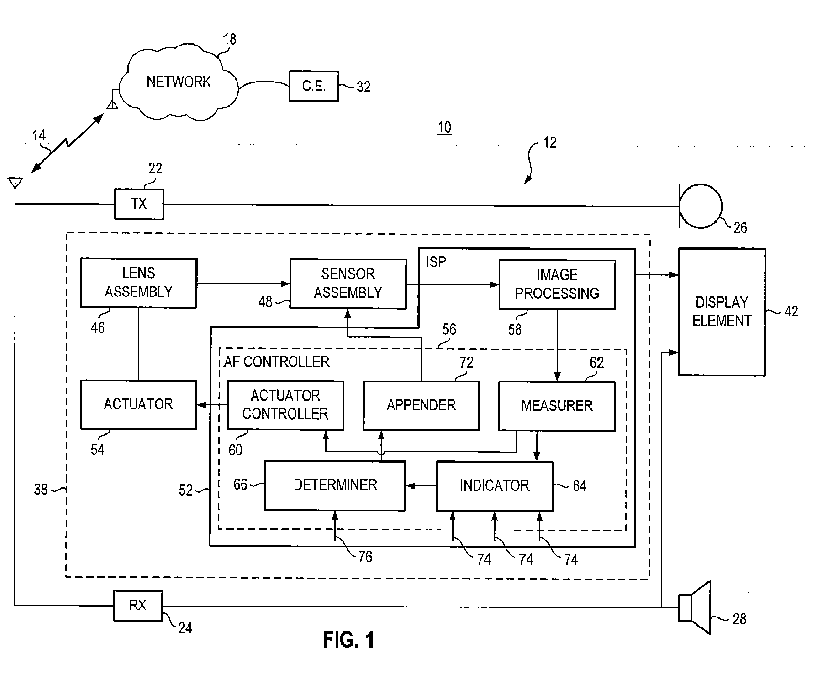

Referring to Figure 1, a communication system, shown generally at 10, provides for communications between communication devices. In the exemplary implementation, the communication system 10 forms a radio communication system in which a communication path extending between sets of communication devices includes a portion of the electromagnetic spectrum upon which radio channels are defined. Because radio channels are utilized for at least a portion of the communication path, a communication device need not be fixedly connected by way of a wireline connection with another communication device in order to communicate to effectuate a communication service. The communication system 10 is, e.g., representative of a cellular communication system, a WiFi communication system, or any of various other radio communication systems. Here, a wireless device 12 communicates by way of radio channels 14 with a communication device forming a portion of a communication network 18. While the following description shall describe operation of a device 12, implemented as a wireless device operable in the communication system 10, in other implementations the device 12 is implemented in other manners, for instance, as a standalone device, irrespective of communication-connectivity in a communication system, such as the communication system 10.

The device 12, configured to be operable in the communication system, includes transceiver circuitry, represented in Figure 1 by a transmitter (Tx) 22 and a receiver (Rx) 24. A microphone 26 is coupled to the transmitter 22, and a speaker 28 is coupled to the receiver 24. Information transmitted by the transmitter 22 of the transceiver circuitry is communicated by way of radio channels 14 for delivery to the communication network 18. The communication network, e.g., routes the communication information therethrough for delivery to an ultimate endpoint, here represented by a communication endpoint (CE) 32. And, information originated at the communication endpoint 32 is routed through the communication network 18, sent upon radio channels 14 for delivery to the device 10 and detection by the receiver 24 of the transceiver circuitry.

The wireless device 12 forms a multi-functional device, here also including camera functionality provided by a camera module 38. The camera module functions to record images that are displayable at a display element 42 of a user interface or which are communicated by the transceiver circuitry to a remote location, such as the communication endpoint 32.

The camera module 38 is functionally represented, formed of functional elements, implemented in any desired manner including, for instance, hardware elements, firmware elements, program code executable by processing circuitry, and combinations thereof.

The camera module here shown to include a lens assembly 46, a sensor assembly 48, and an ISP (Image Signal Processor) 52. An actuator 54 forming, e.g., an electric step motor, is configured to generate translation forces that move the lens assembly or elements thereof to focus a target image. The camera module further includes an autofocus controller that forms the apparatus 56 of an implementation of the present disclosure. The apparatus 56 is also functionally represented, implementable in any desired manner, including hardware elements, firmware elements, program codes executable by processing circuitry, and combinations thereof. In the exemplary implementation, the apparatus 56 forms part of the ISP 52, implemented, e.g., in part by code executable by processing circuitry. The ISP 52 also includes an image processor part 58 that performs various image processing operations upon sensed indications provided by the sensor assembly 48.

The apparatus 56 here forms an AF Controller and is shown to include an actuator controller 60, a measurer 62, an autofocus-actuator stability time indicator 64, a determiner 66, and a vertical blank appender 72. The elements forming the apparatus 56 operate to control the autofocus procedure and, particularly, provide for quicker performance of autofocus procedures by eliminating the conventional requirement to wait up to almost entire frame periods between frame periods during which sensor exposures are made pursuant to auto focusing operations.

The measurer 62 measures, or is provided with information associated with image processing performed by the image processing part 58 and, in turn, provides indications to the actuator controller 60. The actuator controller 60 controls operation of the actuator 54 to position the lens of the lens assembly 46.

Indications are provided to the indicator 64 of an exposure time, an autofocus zone time, and an actuator settling time. The times are representative of time periods to form a sensed image at the sensor assembly 48, to perform electronic or rolling shutter sensor scanning, and to settle subsequent to movement, respectively. The time periods are parameters known at the TSP. Lines 74 represent these parameters provided to the indicator. The autofocus-actuator stability time indicator 64 provides indications of the obtained information to the determiner 66. The determiner is also provided with a frame indication, which is also known at the ISP and here represented by the line 76. In one implementation, the frame period changes over time. Providing updated indications to the determiner provides for recalibration of operation due to the changing of the length of the frame period.

The determiner 66 determines whether the sum of the indications provided by the indicator 64 is larger than the value of the frame period indication. If a determination is made that the total sum is greater than the time period defined by the frame-period indication, then the determiner provides an indication to the blank period appender 72 to cause the appender to append, i.e., concatenate or add, a blank period to the frame period. By appending the blank period to the frame period, the resultant combination is of an increased time length. Through appropriate selection of the size of the blank period, the combined period is caused to at least correspond to the summed periods associated with the value provided by the indicator to the determiner.

The appender provides an indication to the sensor assembly 48 and/or the image processor 58 of the length of the blank period that is selected to be appended to the frame period. The blank period is appended to the frame period. Addition of the blank period to the frame period permits operations performed pursuant to an autofocus procedure at a particular zone or stage to be completed, including time for actuator settling, within the time period corresponding to the expanded frame period. In contrast to conventional schemes that require allocation of an entire frame if the exposure, autofocus zone, and actuator settling time periods collectively exceed the length of an associated frame, even if by a small amount, appending of the blank period is selected to be only as long as necessary therefore reducing time delays that are otherwise associated with allocation of an entire frame.

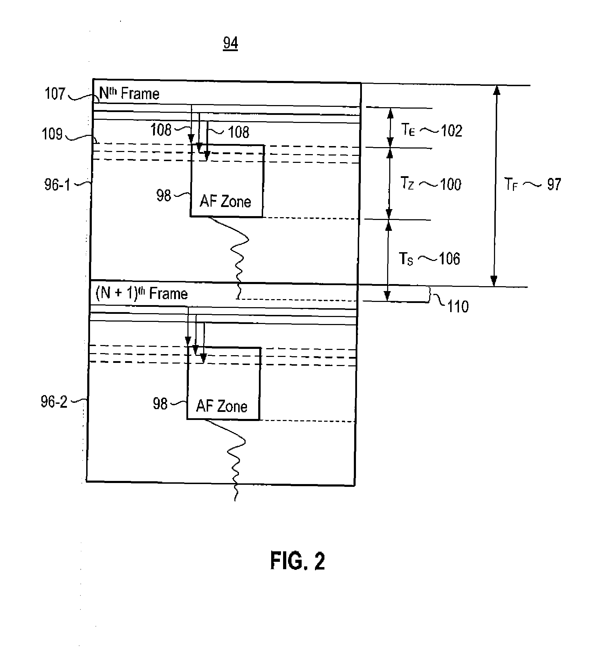

Figure 2 illustrates a representation 94 that shows two frames 96. The frames are of frame lengths, which define frame periods 97, represented by T_{F}. The first and second frames 96-1 and 96-2, respectively, are time-adjacent to one another. Autofocus (AF) zones 98 are shown at, i.e., during, each frame 96. An autofocus zone represents a region of interest of an image recorded during a frame. The time period 100 for positioning a lens assembly into focus at each zone 98 is represented by T_{z}. A time period 102, represented by T_{E}, is representative of the time period for exposure of sensors to incident light of a target image during an autofocus stage or zone. The time period 106, represented by Tₛ, is representative of a time period for settling of actuator oscillations, or other movement, that affects the autofocus procedure at an autofocus zone or stage. Horizontal lines 107 represent exposure lines that are indicative of focusing operations in which exposure of an image is made on a line-by-line basis. Arrows 108 represent lag times between exposure and reading of the exposures, which are represented by the horizontal lines 109.

In the representation 94 of Figure 2, the sum of the time periods 100, 102, and 106 exceeds the frame period 97. That is to say, the length of the period frame 97 of the frame 96 is less than the summed total of the exposure time, autofocus zone time, and actuator settling time periods. The period 110 extending beyond the end of the first frame 96-1 represents the time extension of the summed time period into the second frame period 96-2. As noted previously, if the summed total of the time periods 100, 102, and 106 exceeds the frame period 97, then the entire following frame, here the second frame 96-2 is reserved, and additional autofocus operations are not performed during the frame period.

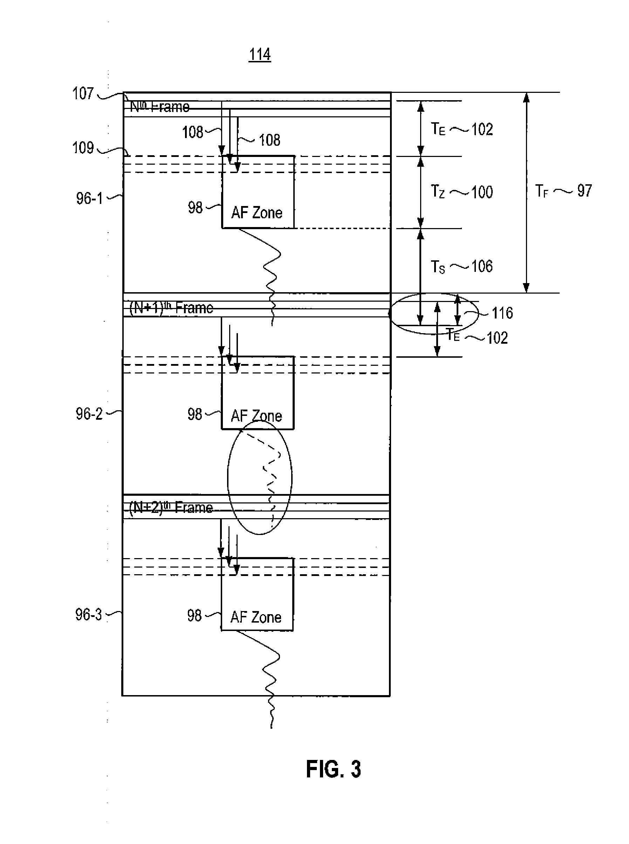

Figure 3 illustrates a representation 114 again shows frames 96, here frames 96-1, 96-2, and 96-3. The autofocus zones 98 are represented in each of the frames 96. The periods 97, 100, 102, and 106 are again shown, associated with the first frame 96-1. Again, the time periods 100, 102, and 106 are collectively greater than the frame period 97. A period 116 represents the period, i.e., the time length, by which the combined time period of the periods 100, 102, and 106 extends beyond the period 97 of the first frame 96-1. The representation 114 further shows that even though the settling time period has not been completed, the exposure time, Tₑ 102 of the second frame commences. To avoid this occurrence, conventionally, the autofocus operations would be delayed during the entirety of the second frame 96-2. While such delay precludes impact to image data resulting from movement from an autofocus actuator, such delay lengthens the time period of the autofocus procedure. The delay is of an entire frame period 97 of the second frame 96-2. Therefore, the second autofocus zone procedure is delayed until the third frame 96-3.

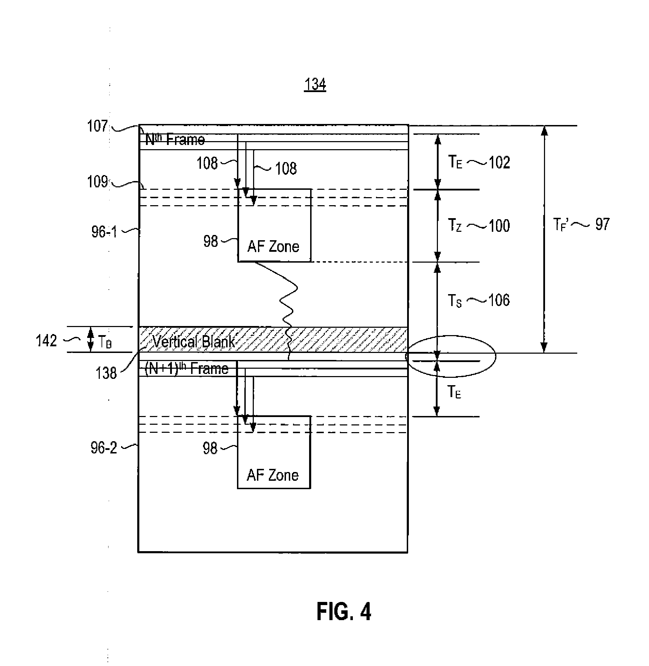

Figure 4 illustrates a representation 134 that shows the use of a blank period 138, designated as "vertical blank" in Figure 4, that is appended to the frame 96-1. As the blank period 138 is followed by the second frame 96-2, the blank period 138 is also inserted between time-adjacent frames. The length of the blank period, i.e., the size of the blank period is selected such that the sum of the periods 100, 102, and 106 is the same as, or less than, the combined time-length of the period 97 of the first frame 96-1 and the blank period 138. The time length of the blank period 138, T_{B}, is identified at 142 in Figure 4. Through appropriate selection of the period 142 of the blank period 138, the conventional approach of needing to allocate an entire frame 96-2 due to the extension of the period 106 into the frame 96-2 is obviated.

Referring again to Figure 1, operation of the determiner 66 and the appender 72, using the nomenclature of Figures 2-4, is as follows:

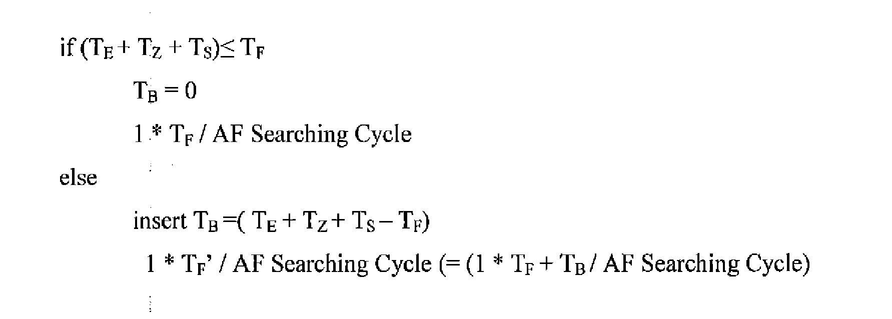

Thereby, the blank period of an appropriate time length is appended to a frame only as needed. The searching cycle comprises the time period to move the lens, the time period for the lens to stabilize subsequent to movement, to measure image sharpness in the autofocus zone, and to determine whether the autofocus procedure needs to continue to a subsequent autofocus zone.

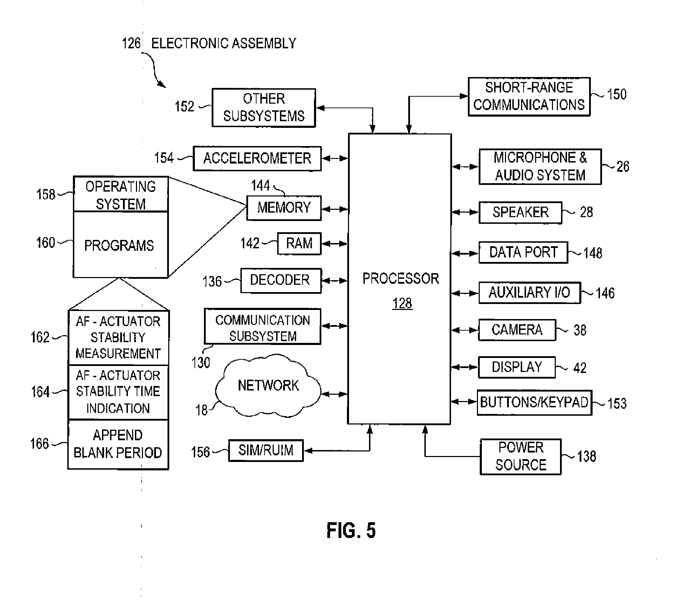

Figure 5 illustrates a representation of an electronic assembly 126 of a wireless device, such as the wireless device 12 shown in Figure 1. The electronic assembly 126 includes multiple components, including a processor 128 that controls overall operation of the wireless device. In various embodiments, functions provided by a wireless device include voice, data, and command communications, which are implemented by a communication subsystem 130. The communication subsystem 130 is used, e.g., to initiate and to support an active voice call or data communication session. The communication subsystem 130 is comprised of any of various combinations of hardware, software, and firmware to perform various designated functions. The software is functionally or conceptually divided into software modules. Software in one module is able to share or to call upon functions of another module. The processor 128 further interacts with the camera module 38.

Data received by a device at which the electronic assembly is implemented can be processed, including decompression and decrypting operations, by a decoder 136. The communication subsystem 130 receives messages from, and sends messages to, the network 18. The communication subsystem 130 facilitates initiation and operation of an active call when the device at which the electronic assembly is implemented is in a real-time, voice communication session. The network 18 is of any various types of networks including, for example, a cellular network, a wireless data network, a wireless voice network, and a network that supports both voice and data communications. The network 18 uses any of a variety of formats, protocols, or standards such as standards including the global system for mobile communications (GSM), code division multiple access (CDMA), wireless Ethernet (Institute of Electrical and Electronics Engineers Standard 802.11), WiFi, and other analogous standards and wireless networking protocols.

A power source 138 provides operative power to operate or to charge the electronic assembly and is implemented with one or more rechargeable batteries or a port to an external power supply.

The processor 128 interacts with additional components, here including a random access memory (RAM) 142 a memory 144, the display element 42, an auxiliary input/output (i/o) subsystem 146, a data port 148, the speaker 28, the microphone 26, together with an associated audio system, a short-range communication subsystem 150, and other subsystems 152. A user of a device in which the electronic assembly 126 is implemented is able to enter data and to operate functions of the device with a data input device coupled to the processor 128. The data input device here includes buttons or a keypad 153 or a graphical user interface produced at the display element 42 in which touches and gestures are detected by a touch-sensitive overlay of the display element 42. The processor 128 interacts with the buttons or keypad or with the touch-sensitive overlay of the display element 42 by way of an electronic controller, which is represented by the other subsystem 152. As part of the user interface, information, such as text, characters, symbols, images, icons, and other items that are rendered are displayable at the display element 42. The processor 128 further interacts with an accelerometer 154 that detects a direction of gravitation forces or user-input acceleration forces and with a decoder 136. In various embodiments, the buttons and keypad 153 are used to operate select functions of the electronic assembly.

The electronic assembly 126 further includes a subscriber identity module or removable user identity module (SIM/RUIM) card 156. In an alternate implementation, identification information is programmed elsewhere, such as at the memory 144.

The electronic assembly 126 further includes an operating system 158 and software programs 160 formed of program code that define algorithms. The operating system 158 and the programs 160 are executed by the processor 128 during operation of the electronic assembly. The operating system 158 and the software programs 160 are stored, for example, at a persistent, updatable store, such as the memory 144, as illustrated. Additional applications or programs can be loaded by way of the network 18, the auxiliary I/O subsystem 146, the data port 148, the short-range communication subsystem 150, or any other subsystem 152 that is suitable for transferring program files. The software programs 160 include software modules, here including an autofocus-actuator stability time indication measuring module 162, an autofocus-actuator stability time indication providing module 164, and a blank period appending module 166. The modules 162, 164, and 166, are used to facilitate the automatic focusing of an optical system of the camera module 38. Each of the software modules can call upon various hardware and software resources of the electronic assembly 126 to execute the functionality of the respective modules. Additionally, functions described in the present disclosure are alternately, or additionally, implemented in any of various portions of the electronic assembly 126, whether the portions form software modules or specialized hardware and firmware modules. In many instances, it is possible to implement the same function in more than one portion of the assembly 126.

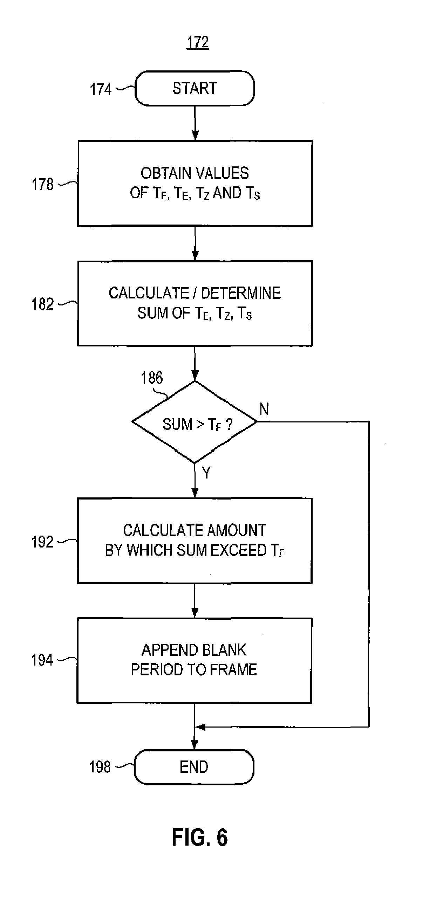

Figure 6 illustrates a process diagram 172 representative of the method of operation of an implementation of the present disclosure. The method facilitates focusing of a camera optical system. The process, in one implementation, is carried out by execution by the processor 128 of programs 160, such as the modules 162, 164, and 166 of the implementation shown in Figure 5.

First, after entry indicated by the start block 174, values of T_{F}, T_{E}, T_{z}, and Tₛ are obtained, indicated by the block 178. The values, in on implementation, are measured parameters. In another implementation, the values are based upon prior measurements, formed, e.g., of averages obtained over a plurality of prior frames. In another implementation, one of the values are set parameter values of the camera module. Then, and as indicated by the block 182, a total, formed of the sum of the obtained values T_{E}, T_{Z}, and T_{S}, is calculated.

Then, a determination is made, indicated at the decision block 186 as to whether the total is greater than the value of T_{F}. If the sum of T_{E}, T_{z}, and Tₛ is not greater than the value of T_{F}, no blank period is used and the no branch is taken to the end block 198.

If, conversely, the total is greater than the frame length (e.g., if the sum of T_{E}, T_{z}, and Tₛ is greater than the value of T_{F}), the yes branch is taken to the block 192, and a determination is made of the amount by which the total exceeds the frame length T_{F}. Then, and as indicated by the block 194, a blank period of a length at least corresponding to the determined difference (e.g., determined difference = (T_{E}+T_{z}+T_{S})-T_{F}) is appended to the frame. And, a path is taken to the end block 198.

Thereby, a manner is provided by which more quickly to permit performance of an autofocus procedure at a device having camera functionality.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for automatically focusing a camera optical system, said apparatus comprising:
an autofocus-actuator stability time indication module configured to provide an autofocus-actuator stability time; and
a blank period appender module configured to append a blank period to an image frame period when the autofocus-actuator stability time is greater than a threshold.

2. The apparatus of claim 1 wherein the autofocus-actuator stability time is a function of an image exposure time period.

3. The apparatus of claim 1 or claim 2 wherein the autofocus-actuator stability time is a function of an autofocus zone time period.

4. The apparatus of any one of claims 1-3 wherein the autofocus-actuator stability time is a function of an autofocus-actuator settling period.

5. The apparatus of any one of claims 1-4 wherein the autofocus-actuator stability time comprises a sum of an image exposure time period, an autofocus zone time period, and an autofocus-actuator settling period.

6. The apparatus of any one of claims 1-5 wherein the autofocus-actuator stability time comprises a selectable parameter value.

7. The apparatus of any one of claims 1-6 wherein the autofocus-actuator stability comprises a fixed parameter value.

8. The apparatus of any one of claims 1-7 wherein the selected threshold comprises a time substantially equal to a frame length.

9. The apparatus of any one of claims 1-8 further comprising a determiner module configured to determine an amount by which the autofocus-actuator stability time is greater than the selected threshold.

10. A method for automatically focusing a camera optical system, said method comprising:
appending a blank period to an image frame period when an autofocus-actuator stability time is greater than a threshold.

11. The method of claim 10 wherein the autofocus-actuator stability time is a function of an image exposure time period.

12. The method of any one of claims 10-11 wherein the autofocus-actuator stability time is a function of an autofocus zone time period.

13. The method of any one of claims 10-12 wherein the autofocus-actuator stability time is a function of an autofocus actuator settling period.

14. The method of any one of claims 10-13 wherein the autofocus-actuator stability time comprises a sum of an image exposure time period, an autofocus zone time period, and an autofocus-actuator settling period and wherein the threshold comprises a frame period.

15. The method of any one of claims 10-14 further comprising determining an amount by which the autofocus actuator stability time is greater than the threshold.
